# EUROPEAN PATENT APPLICATION

(11) **EP 4 715 456 A1**
(43) Date of publication of application: **25.03.2026**
(21) Application number: 24807047.6
(22) Date of filing: 30.04.2024
(51) Int. Cl.: G02F 1/13, G02F 1/1345

(54) **LIGHT CONTROL SHEET AND METHOD FOR MANUFACTURING LIGHT CONTROL SHEET**

(30) Priority: 18.05.2023 JP 2023082371
(71) Applicant: Toppan Holdings Inc., Tokyo 110-0016 (JP)
(72) Inventor: SHONO, Takuma, Tokyo 110-0016 (JP); HOSHINO, Tatsuya, Tokyo 110-0016 (JP); YASUHARA, Toshiji, Tokyo 110-0016 (JP); NAKAMURA, Gen, Tokyo 110-0016 (JP)
(74) Representative: TBK
(86) International application number: PCT/JP2024/016713
(87) International publication number: WO 2024/237093

(57) **Abstract**

A sheet region of a light control sheet has an insulating portion in which a non-conductive portion of each of a first transparent electrode layer and a second transparent electrode layer that are a pair of transparent electrode layers, is located, and a light control unit in which a conductive portion of each of the first transparent electrode layer and the second transparent electrode layer that are the pair of transparent electrode layers, is located and that is divided by the insulating portion. A second end region has a bridge portion that is connected to the light control unit and extends in a strip shape along an outer edge of the light control sheet, and a second connection portion that extends from the bridge portion and is configured to be connected to a second wiring portion. The conductive portion of the second transparent electrode layer is located in each of the bridge portion and the second connection portion.

## Description

### [Technical Field]

The present disclosure relates to a light control sheet having a variable light transmittance, and a method of producing the light control sheet.

### [Background Art]

A light control sheet includes a light control layer containing a liquid crystal composition, and a pair of transparent electrode layers sandwiching the light control layer. Each of the transparent electrode layers is supported by a transparent support layer on the side facing away from the light control layer. The alignment state of the liquid crystal composition is changed depending on whether a voltage is applied to the pair of transparent electrode layers; thus, the light control sheet is switchable between a transparent state in which light is transmitted through the light control layer and an opaque state in which light is prevented from being transmitted through the light control layer by scattering or the like.

A structure is proposed in which a light control sheet is divided into a plurality of regions and is switchable between a transparent state and an opaque state for each of the regions, in order to achieve higher designability and expanded functions (see, for example, Patent Literature 1). A light control sheet is divided into a plurality of regions by partially insulating transparent electrode layers, for example, by cutting using a cutting device or laser irradiation.

### [Citation List]

### [Patent Literature]

[PTL 1] JP 2018-60128 A

### [Summary of the Invention]

### [Technical Problem]

When the light control sheet is divided into a plurality of regions using a cutting device, transparent support layers located on the surfaces of the light control sheet are also cut together with the transparent electrode layers. Thus, the surfaces of the light control sheet after cutting need to be protected, and a rough surface after cutting may lead to a poor appearance of the light control sheet.

On the other hand, when the light control sheet is divided into a plurality of regions by laser irradiation, a laser beam is transmitted through the transparent support layers, avoiding cutting the surfaces of the light control sheet. However, a laser beam is also transmitted through the light control layer, insulating both the pair of transparent electrode layers. Thus, for each of the regions obtained by division, wires for voltage application need to be connected to the respective transparent electrode layers sandwiching the light control layer. Therefore, a larger number of wires complicate the production of a light control sheet and the control of voltage application.

### [Solution to Problem]

An aspect of a light control sheet is a light control sheet including: a light control layer containing a liquid crystal composition; and a first transparent electrode layer and a second transparent electrode layer that are a pair of transparent electrode layers, in which each of the pair of transparent electrode layers includes a conductive portion, and a non-conductive portion that extends linearly as viewed perpendicular to a surface of the light control sheet, the light control sheet has a sheet region in which the light control layer is sandwiched between the pair of transparent electrode layers, and an end region in which the second transparent electrode layer extends from the sheet region, as viewed perpendicular to the surface of the light control sheet, the sheet region has an insulating portion in which the non-conductive portion of each of the pair of transparent electrode layers is located, and a light control unit in which the conductive portion of each of the pair of transparent electrode layers is located and that is divided by the insulating portion, the end region has a bridge portion that is connected to the light control unit and extends in a strip shape along an outer edge of the light control sheet, and a connection portion that extends from the bridge portion and is configured to be connected to a wiring portion for electrically connecting the second transparent electrode layer to a power supply, and the conductive portion of the second transparent electrode layer is located in each of the bridge portion and the connection portion.

An aspect of a method of producing a light control sheet is a method of producing a light control sheet, the method including: forming a laminate sheet including a light control layer that contains a liquid crystal composition and a first transparent electrode layer and a second transparent electrode layer that are a pair of transparent electrode layers sandwiching the light control layer; irradiating a portion of the laminate sheet from a first end to a position in front of a second end with a laser beam to form a non-conductive portion that has a linear shape and a conductive portion that is divided by the non-conductive portion in each of the pair of transparent electrode layers and form a non-irradiated portion that extends in a strip shape along the second end and has not been irradiated with the laser beam; and removing portions of the light control layer and the first transparent electrode layer in a region including the non-irradiated portion to form an end region, in which the end region has a bridge portion that is connected to the conductive portion of the second transparent electrode layer at a position corresponding to the non-irradiated portion, and a connection portion that extends from the bridge portion and is configured to be connected to a wiring portion for electrically connecting the second transparent electrode layer to a power supply.

### [Brief Description of the Drawings]

Fig. 1 is a diagram showing a cross-sectional structure of a light control sheet of a first embodiment.
Fig. 2 is a diagram showing a planar structure of the light control sheet of the first embodiment.
Fig. 3 is a diagram showing part of the cross-sectional structure of the light control sheet of the first embodiment.
Fig. 4 is a diagram showing a production process of the light control sheet of the first embodiment.
Fig. 5 is a diagram showing a production process of the light control sheet of the first embodiment.
Fig. 6 is a diagram showing a planar structure of a light control sheet of a second embodiment.
Fig. 7 is a diagram showing a planar structure of a light control sheet of a third embodiment.

### [Description of the Embodiments]

### (First embodiment)

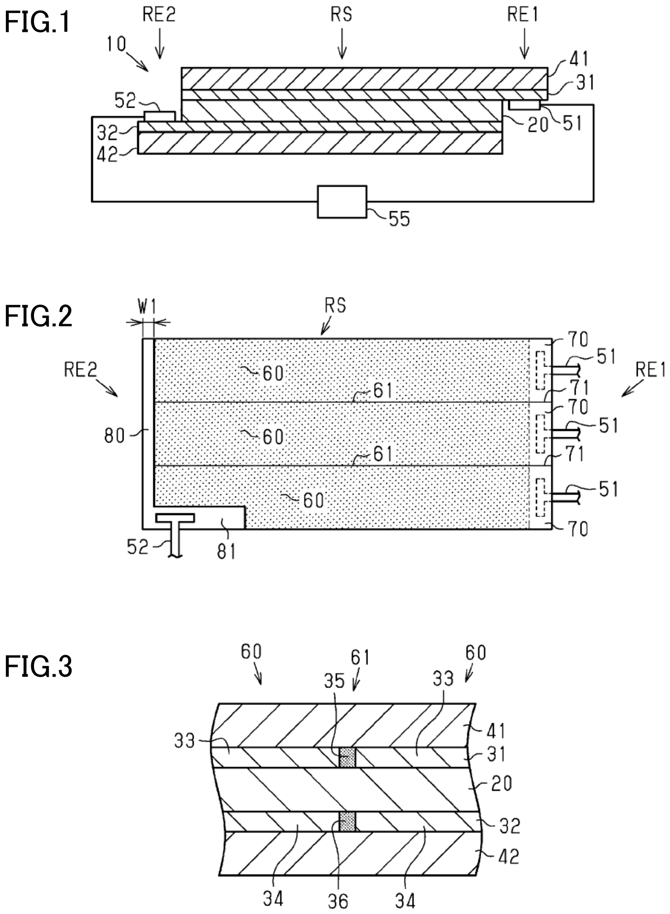

A light control sheet of a first embodiment and a method of producing the light control sheet will be described with reference to Figs. 1 to 5.

### [Layer configuration of light control sheet]

A layer configuration of the light control sheet will be described with reference to Fig. 1. As shown in Fig. 1, a light control sheet 10 includes a light control layer 20, a first transparent electrode layer 31, a second transparent electrode layer 32, a first transparent support layer 41, and a second transparent support layer 42. The light control layer 20 is sandwiched between the first transparent electrode layer 31 and the second transparent electrode layer 32, and is in contact with the transparent electrode layers 31 and 32. The first transparent support layer 41 supports the first transparent electrode layer 31 on the side of the first transparent electrode layer 31 facing away from the light control layer 20, and the second transparent support layer 42 supports the second transparent electrode layer 32 on the side of the second transparent electrode layer 32 facing away from the light control layer 20.

A detailed configuration of the layers will be described. The light control layer 20 includes a transparent polymer layer and a liquid crystal composition. The transparent polymer layer has voids, and the voids are filled with the liquid crystal composition. The voids have a spherical shape, an ellipsoid shape, or an irregular shape.

The light control layer 20 has a polymer network structure, a polymer dispersed structure, or a capsule structure. The light control layer 20 having a polymer network structure has a three-dimensional mesh polymer network. The polymer network is an example of a transparent polymer layer, and a liquid crystal composition is held in voids of the mesh communicating with each other of the polymer network. The light control layer 20 having a polymer dispersed structure includes a transparent polymer layer having many isolated voids, and a liquid crystal composition is held in the voids dispersed in the transparent polymer layer. The light control layer 20 having a capsule structure holds a liquid crystal composition in voids in capsules dispersed in a transparent polymer layer.

The transparent polymer layer is a polymer of a photopolymerizable compound. The photopolymerizable compound may be, for example, an ultraviolet polymerizable compound. The ultraviolet polymerizable compound may be, for example, an acrylate compound such as butyl ethyl acrylate or cyclohexyl acrylate, a methacrylate compound such as N,N-dimethylaminoethyl methacrylate or phenoxyethyl methacrylate, a stilbene compound, a diacrylate compound, a dimethacrylate compound, a triacrylate compound, a trimethacrylate compound, a tetraacrylate compound, a tetramethacrylate compound, or an oligomer of such a compound. The ratio of the transparent polymer layer to the total mass of the light control layer 20 is preferably 20 mass% or more and 80 mass% or less.

The liquid crystal composition contains, for example, liquid crystal molecules having positive dielectric anisotropy. That is, the dielectric constant of the liquid crystal molecules in the major axis direction is higher than the dielectric constant of the liquid crystal molecules in the minor axis direction.

The liquid crystal molecules may be molecules of, for example, a Schiff base compound, an azo compound, an azoxy compound, a biphenyl compound, a terphenyl compound, a benzoic acid ester compound, a tolan compound, a pyrimidine compound, a pyridazine compound, a cyclohexanecarboxylic acid ester compound, a phenylcyclohexane compound, a biphenylcyclohexane compound, a dicyanobenzene compound, a naphthalene compound, or a dioxane compound.

In addition to the liquid crystal molecules, the liquid crystal composition may contain a dichroic dye, a viscosity reducer, an antifoaming agent, an antioxidant, a weathering agent, and the like. Examples of the weathering agent include an ultraviolet absorber and a photostabilizer.

When the liquid crystal composition contains a dichroic dye, the light control sheet 10 in an opaque state can be in a color different from white.

Molecules of the dichroic dye have an elongated shape, and the absorbance in the visible range of the dichroic dye molecules in the major axis direction is higher than that in the minor axis direction. The dichroic dye exhibits a predetermined color while the major axes of the dichroic dye molecules are substantially perpendicular to the incident direction of light. The dichroic dye exhibits, for example, black or a color close to black. The dichroic dye exhibits a color by being driven by a guest-host configration in which liquid crystal molecules serve as a host. The dichroic dye may be, for example, a polyiodine, an azo compound, an anthraquinone compound, a naphthoquinone compound, an azomethine compound, a tetrazine compound, a quinophthalone compound, a merocyanine compound, a perylene compound, or a dioxazine compound.

The light control layer 20 may include spacers dispersed throughout the entire transparent polymer layer. The spacers define the thickness of the light control layer 20 around the spacers to allow the light control layer 20 to have a uniform thickness. The spacers may be bead spacers, or photospacers formed by exposure and development of photoresist, as long as the spacers are translucent.

Each of the first transparent electrode layer 31 and the second transparent electrode layer 32 is conductive and transparent to light in the visible range. The material of the transparent electrode layers 31 and 32 may be, for example, indium tin oxide, fluorine-doped tin oxide, tin oxide, zinc oxide, carbon nanotubes, poly(3,4-ethylenedioxythiophene), silver, a silver alloy, or the like.

Each of the first transparent support layer 41 and the second transparent support layer 42 is a substrate transparent to light in the visible range. The material of the transparent support layers 41 and 42 may be, for example, a synthetic resin or an inorganic compound. The synthetic resin may be, for example, a polyester such as polyethylene terephthalate or polyethylene naphthalate, a polyacrylate such as polymethyl methacrylate, a polycarbonate, a polyolefin, or the like. The inorganic compound may be, for example, silicon dioxide, silicon oxynitride, silicon nitride, or the like.

The light control sheet 10 has a sheet region RS, a first end region RE1, and a second end region RE2. In the sheet region RS, the light control layer 20 and the layers sandwiching the light control layer 20 are located. In other words, the sheet region RS has a structure in which the light control layer 20 is sandwiched between the pair of transparent electrode layers 31 and 32.

The first end region RE1 and the second end region RE2 are located at end portions of the light control sheet 10. In the first end region RE1, the first transparent support layer 41 and the first transparent electrode layer 31 extend from the sheet region RS. That is, in the first end region RE1, the first transparent electrode layer 31 is exposed from the light control layer 20 and from the second transparent electrode layer 32 and the second transparent support layer 42. First wiring portions 51 for electrically connecting the first transparent electrode layer 31 to a power supply are connected to the surface of the exposed first transparent electrode layer 31.

In the second end region RE2, the second transparent support layer 42 and the second transparent electrode layer 32 extend from the sheet region RS. That is, in the second end region RE2, the second transparent electrode layer 32 is exposed from the light control layer 20 and from the first transparent electrode layer 31 and the first transparent support layer 41. A second wiring portion 52 for electrically connecting the second transparent electrode layer 32 to a power supply is connected to the surface of the exposed second transparent electrode layer 32.

In Fig. 1, for convenience of description, the first end region RE1 and the first wiring portions 51 are located on one side of the sheet region RS, and the second end region RE2 and the second wiring portion 52 are located on the other side of the sheet region RS; however, the regions RS, RE1, and RE2 and the wiring portions 51 and 52 are arranged as described later.

Each of the first wiring portions 51 and the second wiring portion 52 includes, for example, a conductive adhesive layer and a circuit board. The conductive adhesive layer may be, for example, composed of an anisotropic conductive film (ACF), an anisotropic conductive paste (ACP), an isotropic conductive film (ICF), an isotropic conductive paste (ICP), or the like. The circuit board may be, for example, a flexible printed circuit (FPC). Alternatively, each of the first wiring portions 51 and the second wiring portion 52 may have a structure in which a conductive material such as a conductive tape is joined with a conducting wire by soldering.

The transparent electrode layers 31 and 32 are electrically connected to a control unit 55 via the wiring portions 51 and 52. The control unit 55 applies a driving voltage as an AC voltage for changing the alignment state of the liquid crystal molecules to the transparent electrode layers 31 and 32 through the wiring portions 51 and 52. The light control sheet 10, the control unit 55, and the wiring portions 51 and 52 constitute a light control device.

The light control sheet 10 is bonded to a transparent substrate that is an attachment object. The transparent substrate is a glass substrate or a resin substrate. Examples of the transparent substrate include a window glass mounted on a moving object such as a vehicle or an aircraft, a window glass installed in a building, and a partition placed in a vehicle or indoors. The light control sheet 10 is bonded to a plane or curved surface. The light control sheet 10 may be sandwiched between two transparent substrates.

### [Planar configuration of light control sheet]

The arrangement of the regions RS, RE1, and RE2 and the wiring portions 51 and 52 in the light control sheet 10 will be described with reference to Figs. 2 and 3. In Fig. 2, the sheet region RS is indicated by dots for ease of understanding.

As shown in Fig. 2, the sheet region RS has a plurality of light control units 60 and one or more insulating portions 61. As viewed perpendicular to the surface of the light control sheet 10, the one or more insulating portions 61 extend linearly, and each of the one or more insulating portions 61 divides adjacent light control units 60. In other words, the sheet region RS is divided into the plurality of light control units 60 by the one or more insulating portions 61.

Fig. 2 shows an example in which the light control units 60 and the one or more insulating portions 61 extend in a single direction, and three light control units 60 extending in a strip shape are divided by two insulating portions 61. The number and shape of the light control units 60 and the one or more insulating portions 61 are not limited to this and are arbitrary, as long as the light control units 60 are divided by the one or more insulating portions 61 having a linear shape.

Fig. 3 shows a cross-sectional structure in the vicinity of one of the insulating portions 61. The first transparent electrode layer 31 includes a first conductive portion 33 and a first non-conductive portion 35, and the second transparent electrode layer 32 includes a second conductive portion 34 and a second non-conductive portion 36. The non-conductive portions 35 and 36 have lost conductivity due to destruction or modification of the transparent electrode layers 31 and 32 by laser irradiation. In other words, the non-conductive portions 35 and 36 are laser processing marks, and extend linearly as viewed perpendicular to the surface of the light control sheet 10. The conductive portions 33 and 34 have not been subjected to laser irradiation and are conductive.

In the sheet region RS, the first conductive portion 33 overlaps with the second conductive portion 34, and the first non-conductive portion 35 overlaps with the second non-conductive portion 36, as viewed perpendicular to the surface of the light control sheet 10. The first conductive portion 33 and the second conductive portion 34 are located in the light control units 60, and the first non-conductive portion 35 and the second non-conductive portion 36 are located in the insulating portions 61. That is, in the light control units 60, both the first transparent electrode layer 31 and the second transparent electrode layer 32 are conductive, and in the insulating portions 61, both the first transparent electrode layer 31 and the second transparent electrode layer 32 are not conductive.

Portions of the first conductive portion 33 of the first transparent electrode layer 31 in adjacent light control units 60 are insulated from each other by the first non-conductive portion 35 located as an insulating portion 61 between the portions. Similarly, portions of the second conductive portion 34 of the second transparent electrode layer 32 in adjacent light control units 60 are insulated from each other by the second non-conductive portion 36 located as an insulating portion 61 between the portions.

Returning to Fig. 2, the first end region RE1 has first connection portions 70 and one or more end insulating portions 71. The first connection portions 70 extend continuously from the light control units 60 in the sheet region RS. In the first connection portions 70, the first conductive portion 33 of the first transparent electrode layer 31 is located. The end insulating portions 71 extend continuously and linearly from the insulating portions 61 in the sheet region RS. In the end insulating portions 71, the first non-conductive portion 35 of the first transparent electrode layer 31 is located. Portions of the first conductive portion 33 of the first transparent electrode layer 31 in adjacent first connection portions 70 are insulated from each other by the first non-conductive portion 35 located as an end insulating portion 71 between the portions.

Thus, each of the light control units 60 is provided with one of the first connection portions 70 in which the corresponding one of the light control units 60 is electrically connected to the first transparent electrode layer 31, and adjacent first connection portions 70 are divided by one of the end insulating portions 71. The first wiring portions 51 are connected to portions of the first transparent electrode layer 31 in the respective first connection portions 70.

The second end region RE2 has a bridge portion 80 and a second connection portion 81. The bridge portion 80 extends in an elongated strip shape along an outer edge of the light control sheet 10, and is connected to the light control units 60. Specifically, the bridge portion 80 extends in a direction intersecting the direction in which the light control units 60 extend, and is connected to end portions of the light control units 60 on one side in the direction in which the light control units 60 extend. For example, the plurality of light control units 60 extend in a single direction, and the bridge portion 80 extends in a direction perpendicular to the direction in which the light control units 60 extend.

In the bridge portion 80, the second conductive portion 34 of the second transparent electrode layer 32 is located. That is, in the entire bridge portion 80, the second transparent electrode layer 32 is conductive. Thus, in the second transparent electrode layer 32, the bridge portion 80 is electrically connected to the light control units 60.

The second connection portion 81 extends from the bridge portion 80 in a direction different from an extending direction in which the bridge portion 80 extends. Specifically, the second connection portion 81 extends along the outer edge of the light control sheet 10 from an end portion of the bridge portion 80 in the extending direction. For example, in the light control sheet 10 having a rectangular shape, the bridge portion 80 extends along a first side of the light control sheet 10, and the second connection portion 81 extends along a second side of the light control sheet 10 perpendicular to the first side from the end portion of the bridge portion 80. An outer edge of one of the light control units 60 adjacent to the second connection portion 81 is recessed around the second connection portion 81, as viewed perpendicular to the surface of the light control sheet 10.

In the second connection portion 81, the second conductive portion 34 of the second transparent electrode layer 32 is located, and in the second transparent electrode layer 32, the bridge portion 80 is electrically connected to the second connection portion 81. The second wiring portion 52 is connected to the second transparent electrode layer 32 in the second connection portion 81.

Thus, the second end region RE2 has no insulating portion, and the single second wiring portion 52 is connected to the second end region RE2.

### [Electrical configuration of light control device]

Voltage signals input from the control unit 55 to the respective first wiring portions 51 are input to portions of the first transparent electrode layer 31 in the light control units 60 electrically connected to the first connection portions 70 connected to the respective first wiring portions 51. That is, separate voltage signals are input to portions of the first transparent electrode layer 31 in the respective light control units 60.

On the other hand, the single second connection portion 81 connected to the second wiring portion 52 is electrically connected to portions of the second transparent electrode layer 32 in the respective light control units 60 via the bridge portion 80; thus, a voltage signal input from the control unit 55 to the second wiring portion 52 is input to the portions of the second transparent electrode layer 32 in the respective light control units 60. That is, a common voltage signal is input to the portions of the second transparent electrode layer 32 in the respective light control units 60.

In the above configuration, the control unit 55 can control the application of a driving voltage to the light control units 60 for each of the light control units 60 by controlling the input of a voltage signal to the first transparent electrode layer 31 for each of the light control units 60 while a common voltage signal is input to the portions of the second transparent electrode layer 32 in the respective light control units 60.

The light control units 60 are switched from one to the other of the transparent state and the opaque state based on a change in the alignment state of the liquid crystal molecules. In the transparent state, the light control units 60 have a relatively high light transmittance, and in the opaque state, the light control units 60 have a relatively low light transmittance. Furthermore, in the transparent state, the light control units 60 have a relatively low haze value, and in the opaque state, the light control units 60 have a relatively high haze value.

When no driving voltage is applied, the major axes of the liquid crystal molecules are randomly aligned. Thus, light incident on the light control units 60 is scattered in various directions in the light control layer 20 due to the birefringence of the liquid crystal molecules and the refractive index difference between the liquid crystal molecules and the transparent polymer layer. Therefore, the light control units 60 are in the opaque state when no driving voltage is applied.

When a driving voltage is applied to the liquid crystal molecules having positive dielectric anisotropy, the major axes of the liquid crystal molecules are aligned in the electric field direction. That is, the alignment of the liquid crystal molecules is changed so that the major axes of the liquid crystal molecules are in the thickness direction of the light control layer 20. Thus, scattering of light in the light control layer 20 is prevented, and light is more easily transmitted through the light control units 60. Therefore, the light control units 60 are in the transparent state when a driving voltage is applied.

In the present embodiment, for each of the light control units 60, both the first transparent electrode layer 31 and the second transparent electrode layer 32 are insulated from the surroundings; however, a common voltage signal is input from the single second wiring portion 52 to the portions of the second transparent electrode layer 32 in the respective light control units 60 through the bridge portion 80. Thus, it is possible to prevent the arrangement of the wiring portions and the control of the voltage signal input from being complicated, as compared with the case where the wiring portions 51 and 52 are provided in each of the first transparent electrode layer 31 and the second transparent electrode layer 32 for each of the light control units 60, that is, the case where separate voltage signals are input to the portions of the second transparent electrode layer 32 in the respective light control units 60.

The second wiring portion 52 is connected to the second connection portion 81 extending from the bridge portion 80 toward the first end region RE1; thus, the first wiring portions 51 and the second wiring portion 52 can be placed closer to each other. Therefore, the wires extending from each of the first transparent electrode layer 31 and the second transparent electrode layer 32 are easily collected, as compared with the case where the wires extend from each of the sides of the light control sheet 10 facing each other.

In order to prevent disconnection and obtain good electrical connection in the bridge portion 80, a width W1 of the bridge portion 80 is preferably 2 mm or more. When the inventors conducted experiments, in a test example in which the minimum width of the bridge portion 80 was 2 mm or more, each of the plurality of light control units 60 was successfully switched between the transparent state and the opaque state, regardless of the composition of the light control layer 20 or the materials of the transparent electrode layers 31 and 32. On the other hand, in a test example in which the minimum width of the bridge portion 80 was 1 mm, in some of the plurality of light control units 60, switching between the transparent state and the opaque state, that is, the change in transparency, was insufficient.

In order to prevent the region having no light control function from being large, the width W1 of the bridge portion 80 is preferably 10 mm or less. The width W1 of the bridge portion 80 is smaller than the width of the second connection portion 81.

The end regions RE1 and RE2 may be covered with a sealing portion made of a resin. Furthermore, an outer peripheral sealing portion made of a resin may be provided in a portion of the region along the outer edge of the light control sheet 10 in which neither of the end regions RE1 and RE2 is located. For example, a portion of the second transparent electrode layer 32 along the outer edge of the light control sheet 10 is exposed from the light control layer 20 and from the first transparent electrode layer 31 and the first transparent support layer 41, and the exposed portion of the second transparent electrode layer 32 is covered with the outer peripheral sealing portion. In that case, the bridge portion 80 has a larger width than the exposed portion. The bridge portion 80 having a larger width than the exposed portion allows the region for outer peripheral sealing to serve as a region having a function of electrical conductivity to the light control units 60.

### [Method of producing light control sheet]

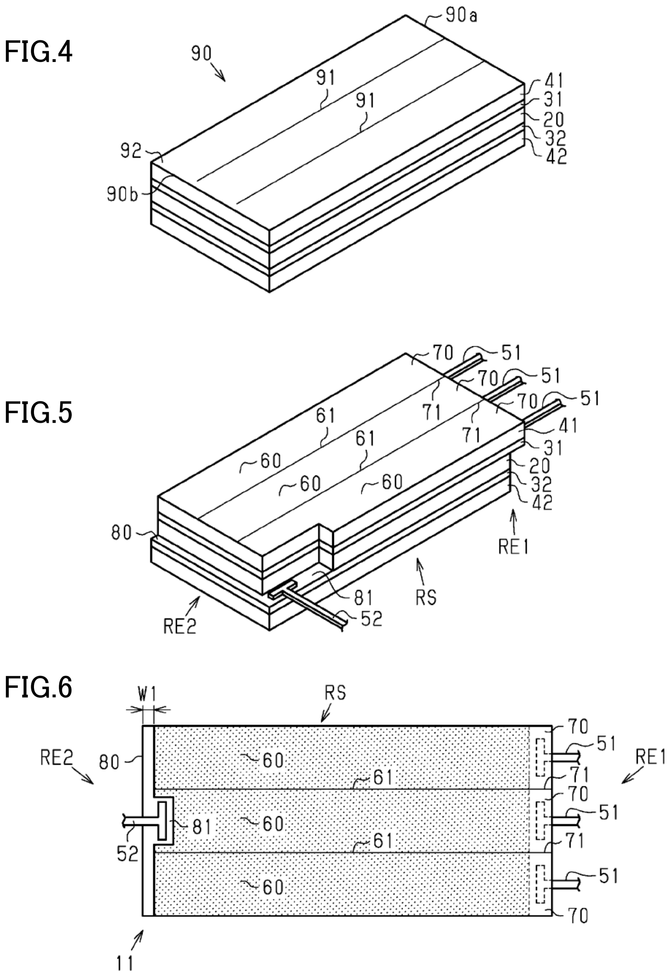

A method of producing the light control sheet 10 will be described with reference to Figs. 4 and 5.

First, a laminate sheet 90 that includes the light control layer 20, the transparent electrode layers 31 and 32, and the transparent support layers 41 and 42 and has a desired shape of the light control sheet 10 is prepared by cutting. At this time, the transparent electrode layer 31 is a uniform conductive film that does not include the non-conductive portion 35, and the transparent electrode layer 32 is a uniform conductive film that does not include the non-conductive portion 36.

As shown in Fig. 4, regions in the laminate sheet 90 to be the one or more insulating portions 61 and 71 are irradiated with a laser beam to simultaneously process the first transparent electrode layer 31 and the second transparent electrode layer 32, thereby forming one or more laser processing portions 91. In the laser processing portions 91, the transparent electrode layers 31 and 32 have been destroyed or modified and have lost conductivity. Thus, the conductive portion 33 and the non-conductive portion 35 are formed in the transparent electrode layer 31, and the conductive portion 34 and the non-conductive portion 36 are formed in the transparent electrode layer 32.

The laser medium and the laser wavelength are not particularly limited. For example, a Nd:YAG laser, a Nd:YVO₄ laser, a CO₂ laser, a semiconductor laser, or the like may be used. The laser wavelength is preferably an infrared wavelength.

In the formation of the laser processing portions 91, a portion of the laminate sheet 90 from a first end 90a toward a second end 90b is irradiated with a laser beam. The first end 90a and the second end 90b are, for example, a pair of sides of the laminate sheet 90 having a rectangular shape facing each other. The laser processing portions 91 are formed in a portion of the laminate sheet 90 from the first end 90a to a position in front of the second end 90b. Thus, a non-irradiated portion 92 that has not been irradiated with a laser beam is formed along the second end 90b of the laminate sheet 90. The non-irradiated portion 92 extends in a strip shape in a direction intersecting the laser processing portions 91.

Subsequently, as shown in Fig. 5, portions of the light control layer 20, the second transparent electrode layer 32, and the second transparent support layer 42 in the vicinity of the first end 90a of the laminate sheet 90 are removed to form the first end region RE1. The laser processing portions 91 extending to the edge of the laminate sheet 90 are formed at the first end 90a; thus, when the first end region RE1 having a strip shape is formed along the first end 90a, the end insulating portions 71 corresponding to the laser processing portions 91 and the first connection portions 70 divided by the end insulating portions 71 are formed in the first end region RE1.

On the other hand, portions of the light control layer 20, the first transparent electrode layer 31, and the first transparent support layer 41 in the vicinity of the second end 90b of the laminate sheet 90 are removed to form the second end region RE2. At this time, a portion corresponding to the non-irradiated portion 92 serves as the bridge portion 80.

When the first end region RE1 and the second end region RE2 are formed, the sheet region RS is formed. In the sheet region RS, the insulating portions 61 corresponding to the laser processing portions 91 and the light control units 60 divided by the insulating portions 61 are located.

Thus, the light control sheet 10 is formed. Then, the first wiring portions 51 are connected to the respective first connection portions 70 in the first end region RE1, and the second wiring portion 52 is connected to the second connection portion 81 in the second end region RE2.

In the above production method, a region that is not irradiated with a laser beam is left in the end portion of the laminate sheet 90, making it possible to easily form the bridge portion 80 having a strip shape electrically connected to the light control units 60. In the formation of the laser processing portions 91, a non-conductive portion may be formed in only one of the transparent electrode layers; however, in that case, laser focusing and power control become a great burden. On the other hand, laser control is easy when the non-conductive portions 35 and 36 are formed by simultaneously processing the transparent electrode layers 31 and 32 by laser irradiation. Thus, it is possible to produce the light control sheet 10 that enables a common voltage signal to be input from the single second wiring portion 52 to the light control units 60, while placing less burden on the production process.

A method of producing the light control sheet 10 different from the above production method may be used, as long as the light control sheet 10 described above can be produced by the method.

As described above, the first embodiment achieves the following effects.

(1-1) The light control sheet 10 is provided with the bridge portion 80, and this enables a common voltage signal to be input from the single second wiring portion 52 to the portions of the second transparent electrode layer 32 in the respective light control units 60 through the bridge portion 80. This makes it possible to prevent the arrangement of the wiring portions and the control of the voltage signal input from being complicated and to allow the region required for connection of the wiring portions to be smaller. Furthermore, the second wiring portion 52 is connected to the second connection portion 81 extending from the bridge portion 80; thus, it is possible to provide a higher degree of flexibility in the arrangement of the second connection portion 81, that is, a higher degree of flexibility in the connection position of the second wiring portion 52.

(1-2) The plurality of light control units 60 extend in a single direction, and the bridge portion 80 extends in a direction intersecting the direction in which the light control units 60 extend. This configuration enables the bridge portion 80 electrically connected to the light control units 60 to have a simple structure.

(1-3) The second connection portion 81 extends from the end portion of the bridge portion 80, and this makes it possible to easily form the second connection portion 81. Furthermore, the second connection portion 81 extends along the outer edge of the light control sheet 10 in a direction different from the direction in which the bridge portion 80 extends; thus, the first wiring portions 51 and the second wiring portion 52 can be placed closer to each other, as compared with the case where the second wiring portion 52 is placed along the bridge portion 80. Therefore, the wires are easily collected outside the light control sheet 10.

(1-4) When the bridge portion 80 has a width of 2 mm or more, it is possible to prevent disconnection in the bridge portion 80, and a driving voltage is suitably applied to the light control units 60 through the bridge portion 80.

(1-5) When the liquid crystal composition of the light control layer 20 contains a dichroic dye, the light control sheet 10 in the opaque state is in a color different from white. Thus, the insulating portions 61 in which the non-conductive portions 35 and 36 as laser processing marks are located are less likely to be conspicuous.

(1-6) The first end region RE1 has the end insulating portions 71 that extend linearly from the insulating portions 61, and the first connection portions 70 that are divided by the end insulating portions 71 and extend from the respective light control units 60. The non-conductive portion 35 of the first transparent electrode layer 31 is located in the end insulating portions 71, and the conductive portion 33 of the first transparent electrode layer 31 is located in the first connection portions 70. This configuration suitably achieves a structure that enables separate voltage signals to be input to the portions of the first transparent electrode layer 31 in the respective light control units 60.

(1-7) In the method of producing the light control sheet 10, a portion of the laminate sheet 90 from the first end 90a to a position in front of the second end 90b is irradiated with a laser beam to form the non-conductive portion 35 and the conductive portion 33 in the transparent electrode layer 31 and the non-conductive portion 36 and the conductive portion 34 in the transparent electrode layer 32 and form the non-irradiated portion 92 having a strip shape along the second end 90b. Then, portions of the light control layer 20 and the first transparent electrode layer 31 in the region including the non-irradiated portion 92 are removed to form the bridge portion 80 at a position corresponding to the non-irradiated portion 92 and form the second connection portion 81 extending from the bridge portion 80. Thus, it is possible to easily form the light control sheet 10 that enables a common voltage signal to be input from the single second wiring portion 52 to the light control units 60.

### (Second embodiment)

A light control sheet of a second embodiment will be described with reference to Fig. 6. In the following, differences between the second embodiment and the first embodiment will be mainly described, and the same components as in the first embodiment are denoted by the same reference signs and are not described.

As shown in Fig. 6, in a light control sheet 11 of the second embodiment, the arrangement of the second connection portion 81 in the second end region RE2 is different from that in the first embodiment. In the second embodiment, the second connection portion 81 extends from a position different from that of the end portion of the bridge portion 80 in the extending direction. For example, the second connection portion 81 extends from a center portion of the bridge portion 80 in the extending direction, and extends in the same direction as the direction in which the bridge portion 80 extends.

In the second embodiment, the second connection portion 81 is located in a region apart from an outer edge of the light control sheet 11, and an outer edge of the light control units 60 is recessed around the second connection portion 81, as viewed perpendicular to the surface of the light control sheet 11. In other words, the second connection portion 81 is disposed to be engaged in the light control units 60.

The above configuration enables the distance from portions of the bridge portion 80 to the second connection portion 81 to be small. Furthermore, it is possible to easily secure a large portion in which the bridge portion 80 is connected to the second connection portion 81. This enables a voltage signal to be stably input from the second connection portion 81 to the portions of the second transparent electrode layer 32 in the respective light control units 60 via the bridge portion 80.

Furthermore, it is possible to secure the light control units 60 having a large size while allowing the region having no light control function to be smaller, as compared with a structure in which the second wiring portion 52 is connected to the bridge portion 80 having a large thickness.

As described above, in addition to the effects (1-1), (1-2), and (1-4) to (1-7) of the first embodiment, the second embodiment achieves the following effects.

(2-1) The second connection portion 81 extends from a position different from that of the end portion of the bridge portion 80 in the extending direction. This configuration enables the distance from portions of the bridge portion 80 to the second connection portion 81 to be small, making it possible to stably input a voltage signal to the portions of the second transparent electrode layer 32 in the respective light control units 60.

(2-2) The outer edge of the light control units 60 is recessed around the second connection portion 81. This configuration makes it possible to secure the light control units 60 having a large size.

### (Third embodiment)

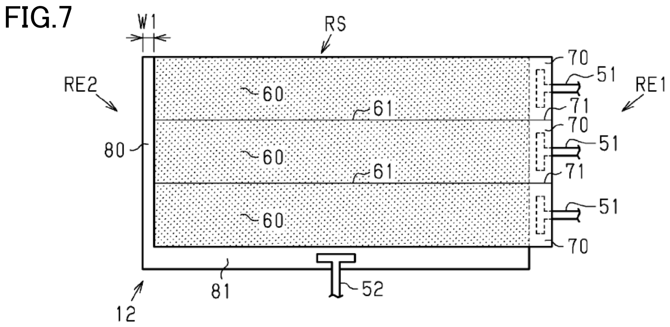

A light control sheet of a third embodiment will be described with reference to Fig. 7. In the following, differences between the third embodiment and the first embodiment will be mainly described, and the same components as in the first embodiment are denoted by the same reference signs and are not described.

As shown in Fig. 7, in a light control sheet 12 of the third embodiment, the arrangement of the second connection portion 81 in the second end region RE2 is different from that in the first embodiment. In the third embodiment, the second connection portion 81 extends from the end portion of the bridge portion 80 in the extending direction, and extends along an outer edge of the light control sheet 12 in a direction different from the direction in which the bridge portion 80 extends. The second connection portion 81 extends along the entire single side of the light control sheet 12, as viewed perpendicular to the surface of the light control sheet 12.

Fig. 7 shows an example in which the second wiring portion 52 is connected to a center portion of the second connection portion 81 in a direction in which the second connection portion 81 extends; however, the second wiring portion 52 may be disposed in a portion of the second connection portion 81 in the vicinity of the bridge portion 80 or disposed in a portion of the second connection portion 81 in the vicinity of the first end region RE1 on the side opposite to the bridge portion 80.

In Fig. 7, the second connection portion 81 is disposed in the region along the entire light control units 60 in the direction in which the light control units 60 extend; however, the second connection portion 81 may have any length. The length of the second connection portion 81 may be smaller than the length of the light control units 60 in the direction in which the light control units 60 extend.

The above configuration makes it possible to provide an even higher degree of flexibility in the connection position of the second wiring portion 52 and dispose the second wiring portion 52 in the vicinity of the first wiring portions 51. Therefore, the wires can be more easily collected outside the light control sheet 12. Furthermore, the outer edge of the light control units 60 does not need to be recessed around the second connection portion 81, making it easy for the plurality of light control units 60 to have the same shape.

As described above, in addition to the effects (1-1) to (1-7) of the first embodiment, the third embodiment achieves the following effects.

(3-1) The second connection portion 81 extends along the entire single side of the light control sheet 12, and thus it is possible to provide an even higher degree of flexibility in the connection position of the second wiring portion 52. Furthermore, it is possible to prevent the shape of the light control units 60 from being distorted around the second connection portion 81, providing a higher degree of flexibility in the shape of the light control units 60.

### (Modifications)

The above embodiments may be implemented with modifications as follows. The following modifications may be implemented in combination.
· The layer configuration of the light control sheet is not limited to the configuration described in the above embodiments, as long as the light control sheet is configured to be switchable between the transparent state and the opaque state based on a change in the alignment state of the liquid crystal molecules by application of a driving voltage.

For example, the light control sheet may include a pair of alignment layers that are provided between the light control layer 20 and each of the transparent electrode layers 31 and 32 to sandwich the light control layer 20. The alignment layers control the alignment of the liquid crystal molecules contained in the light control layer 20. Furthermore, the liquid crystal composition in the light control layer 20 may contain liquid crystal molecules having negative dielectric anisotropy. For example, in the case where the alignment layers are vertical alignment films and the liquid crystal composition has negative dielectric anisotropy, the light control sheet is in the transparent state when no driving voltage is applied to the transparent electrode layers 31 and 32, and the light control sheet is in the opaque state when a driving voltage is applied to the transparent electrode layers 31 and 32.

The light control sheet may include a functional layer having a desired function. The light control sheet may include a functional layer laminated on each of the transparent support layers 41 and 42 as an outermost layer of the light control sheet, or may include a functional layer located between layers such as between the transparent electrode layer 31 and the transparent support layer 41 and between the transparent electrode layer 32 and the transparent support layer 42. The functional layer may be, for example, a hard coat layer, an anti-blocking layer, a primer layer, a protective layer, an index matching layer, or the like.

## Claims

1. A light control sheet comprising:
a light control layer containing a liquid crystal composition; and
a first transparent electrode layer and a second transparent electrode layer that are a pair of transparent electrode layers, wherein
each of the pair of transparent electrode layers includes a conductive portion, and a non-conductive portion that extends linearly as viewed perpendicular to a surface of the light control sheet,
the light control sheet has a sheet region in which the light control layer is sandwiched between the pair of transparent electrode layers, and an end region in which the second transparent electrode layer extends from the sheet region,
as viewed perpendicular to the surface of the light control sheet,
the sheet region has an insulating portion in which the non-conductive portion of each of the pair of transparent electrode layers is located, and a light control unit in which the conductive portion of each of the pair of transparent electrode layers is located and that is divided by the insulating portion,
the end region has a bridge portion that is connected to the light control unit and extends in a strip shape along an outer edge of the light control sheet, and a connection portion that extends from the bridge portion and is configured to be connected to a wiring portion for electrically connecting the second transparent electrode layer to a power supply, and
the conductive portion of the second transparent electrode layer is located in each of the bridge portion and the connection portion.

2. The light control sheet according to claim 1, wherein
as viewed perpendicular to the surface of the light control sheet,
a plurality of the light control units extend in a single direction, and
the bridge portion extends in a direction intersecting the direction in which the light control units extend.

3. The light control sheet according to claim 1, wherein
the connection portion extends from an end portion of the bridge portion in a direction in which the bridge portion extends.

4. The light control sheet according to claim 3, wherein
as viewed perpendicular to the surface of the light control sheet,
the connection portion extends along the outer edge of the light control sheet in a direction different from the direction in which the bridge portion extends.

5. The light control sheet according to claim 4, wherein
as viewed perpendicular to the surface of the light control sheet,
the connection portion extends along an entire single side of the light control sheet.

6. The light control sheet according to claim 1, wherein
as viewed perpendicular to the surface of the light control sheet,
the connection portion extends from a position different from a position of an end portion of the bridge portion in a direction in which the bridge portion extends, and
an outer edge of the light control unit is recessed around the connection portion.

7. The light control sheet according to claim 1, wherein
the bridge portion has a width of 2 mm or more.

8. The light control sheet according to claim 1, wherein
the light control layer includes a transparent polymer layer having a plurality of voids, and the liquid crystal composition that fills the voids.

9. The light control sheet according to claim 8, wherein
the liquid crystal composition contains a dichroic dye.

10. A method of producing a light control sheet, the method comprising:
forming a laminate sheet including a light control layer that contains a liquid crystal composition and a first transparent electrode layer and a second transparent electrode layer that are a pair of transparent electrode layers sandwiching the light control layer;
irradiating a portion of the laminate sheet from a first end to a position in front of a second end with a laser beam to form a non-conductive portion that has a linear shape and a conductive portion that is divided by the non-conductive portion in each of the pair of transparent electrode layers and form a non-irradiated portion that extends in a strip shape along the second end and has not been irradiated with the laser beam; and
removing portions of the light control layer and the first transparent electrode layer in a region including the non-irradiated portion to form an end region, wherein
the end region has a bridge portion that is connected to the conductive portion of the second transparent electrode layer at a position corresponding to the non-irradiated portion, and a connection portion that extends from the bridge portion and is configured to be connected to a wiring portion for electrically connecting the second transparent electrode layer to a power supply.
